(19) Europäisches Patentamt
European Patent Office
Office européen des brevets

(11) Publication number: 0 240 254 A2

# (12) EUROPEAN PATENT APPLICATION

(21) Application number: 87302638.9

(22) Date of filing: 26.03.87

(51) Int. Cl.[4]: C08F 4/60 , C08F 10/00

(30) Priority: 31.03.86 US 846323

(43) Date of publication of application: 07.10.87 Bulletin 87/41

(84) Designated Contracting States: BE DE FR GB IT NL SE

(71) Applicant: EXXON CHEMICAL PATENTS INC.
P O Box 503 Florham Park
US-New Jersey 07932(US)

(72) Inventor: Etherton, Bradley Park
16219 Brookville
Houston Texas 77522(US)

(74) Representative: Dew, Melvyn John et al
Exxon Chemical Limited Exxon Chemical
Technology Centre P.O. Box 1
Abingdon Oxfordshire, OX13 6BB(GB)

## (54) Polymerization catalyst, production and use.

(57) Ethylene and alpha-olefins are homopolymerized or copolymerized with another olefin monomer in the presence of a catalyst system comprising a transition metal containing catalyst component which is the solid reaction product produced by contacting

A. The dried solid obtained by reacting
  i. a dry solid, particulate porous support material with the
  ii. reaction product of
    a. a magnesium compound, and
    b. a polysiloxane, with
B. a halogenating agent, and
C. contacting the halogenated product with a transition metal compound.

EP 0 240 254 A2

# POLYMERIZATION CATALYST, PRODUCTION AND USE

## BACKGROUND OF THE INVENTION

This invention relates to a novel solid catalyst component to be employed with a cocatalyst for use in the polymerization of olefins to homopolyolefins such as polyethylene, polypropylene and the like, or copolymers such as ethylene copolymers with alpha-olefins and diolefins for the production of high bulk density resin granules. The catalyst component shows high activity and excellent hydrogen response for the control of polymer molecular weight. The catalyst evidences good comonomer incorporation for reducing and controlling the density of the polymer. Most importantly, the catalyst is used to produce a granular polymer product with exceptionally high bulk density. Furthermore, the bulk density of the product is controlled independently from the catalyst formulation variables which control activity, $H_2$ response and comonomer incorporation.

The polymer product obtained evidences an important balance of polymer properties, for example, the catalyst system obtains a polymer with a narrow molecular weight distribution and an improved balance in polymer product machine direction tear strength and transverse direction tear strength. As a result, the blown film produced from the polymer product such as linear low density polyethylene manifests an overall high strength.

The catalyst evidences sufficient activity such that removal of catalyst residues from the product is generally unnecessary. In addition, the residues which are present in the resin are of such an innocuous nature that the corrosion, odor, taste, and extractables problems associated with many prior art polymerization catalyst residues are not present with this system.

The catalyst component of this invention comprises a solid reaction product obtained by contacting (A) the dried solid, obtained by contacting (a) an essentially dry, solid, particulate, porous support material such as, for example, silica, alumina, magnesia or mixtures thereof, for example, silica-alumina with (b) the reaction products of a (i) alkyl magnesium compound and a (ii) polysiloxane with (B) a halogenating agent and contacting the halogenated product with a (C) transition metal compound. The novel catalyst component, when used with an organometallic cocatalyst, provides the novel catalyst system of this invention which can be usefully employed for the polymerization of olefins.

The catalyst system can be employed in slurry, single-phase, high pressure, temperature, solution, and gas-phase polymerization processes and is particularly effective for the production of linear polyethylenes such as high-density polyethylene and linear low density polyethylene. The catalyst is preferably used in slurry or gas phase polymerization where the high polymer bulk density advantages are retained.

Recently, interest has arisen in the use of magnesium-titanium complex catalyst components for the polymerization of olefins. For example, European Patent Application 27733, published April 29, 1981 discloses a catalyst component obtained by reducing a transition metal compound with an excess of organomagnesium compound in the presence of a support such as silica and thereafter deactivating the excess organomagnesium compound with certain deactivators including hydrogen chloride.

U.S. Patent No. 4,136,058 discloses a catalyst component comprising an organomagnesium compound and a transition metal halide compound, which catalyst component is thereafter deactivated with a deactivating agent such as hydrogen chloride. This patent does not teach the use of support material such as silica, but otherwise the disclosure is similar to the European patent application discussed above.

U.S. Patent No. 4,250,288 discloses a catalyst which is the reaction product of a transition metal compound, an organomagnesium component and an active non-metallic halide such as HCl and organic halides containing a labile halogen. The catalyst reaction product also contains some aluminum alkyls.

Catalyst components comprising the reaction product of an aluminum alkyl-magnesium alkyl complex plus titanium halide are disclosed in U. S. Patent Nos. 4,004,071 and 4,276,191.

U.S. Patent No. 4,173,547 and U.S. patent No. 4,263,171, disclose respectively a catalyst component comprising silica, an organoaluminum compound, titanium tetrachloride and dibutyl magnesium; a catalyst component comprising a magnesium alkyl-aluminum alkyl complex plus titanium halide on a silica support.

European Patent Application 32,308 discloses polymerizing ethylene in the presence of a catalyst system comprising an organic metal compound and a titanium-containing material which is obtained by reacting together an inert particulate material, an organic magnesium compound, a titanium compound and a halogen containing compound such as $SiCl_4$, $PCl_3$, $BCl_3$, $Cl_2$ and the like.

Each of U.S. Patents 4,402,861; 4,378,304; 4,388,220; 4,301,029; and 4,385,161 disclose supported catalyst systems comprising an oxide support such as silica, an organomagnesium compound, a transition metal compound and one or more catalyst component modifiers. These patents do not disclose the catalysts of this invention.

U.S. Patent No. 4,431,568 discloses a polymerization catalyst which is the reaction product of a solid inorganic oxide support, a hydrocarbon-soluble organomagnesium compound, a chlorosilane, and a titanium compound. This catalyst is used to produce polymers with broad molecular weight distribution, but with good bulk density. The catalyst does not use a polysiloxane, does not use organomagnesium compounds soluble in hydrocarbons such as ethers, does not use alternate chlorinating agents such as alkyl aluminum halides, and must be washed prior to addition of the Ti-containing component. The invention does not produce a polymer with a narrow molecular weight as does the present invention.

European Patent Application No. 105,728 discloses a polymerization catalyst comprising the reaction product of a magnesium alkyl (or alkyl magnesium alkoxide) and hydropolysiloxane which is then contacted with a transition metal alkoxide and a halogenating agent. The catalyst is used to produce different molecular weight distributions is slurry and solution polymerizations. This patent application does not disclose the use of dialkylpolysiloxanes, the use of organomagnesium compounds soluble in hydrocarbons such as ethers, and does not utilize a silica support for control of particle size and bulk density. Furthermore, the catalyst does not utilize a titanium halide compound, but only titanium alkoxides.

European Patent Application No. 58,549 discloses a polymerization catalyst prepared by reacting an organometallic compound with a titanium compound in the presence of the reaction product of an organomagnesium compound, a silicon halide compound, and a solid inorganic oxide. The organomagnesium compound is necessarily soluble in inert hydrocarbons and may contain an electron donor. Such electron donors include siloxanes and polysiloxanes. The catalyst is used to produce polymers having either narrow or broad molecular weight distributions, high bulk densities, and high activities, regardless of use in slurry, solution, gas phase, or high pressure, single phase polymerization. The catalyst does not disclose use of organomagnesium compounds soluble in hydrocarbons such as ethers, does not use chlorinating agents such as alkyl aluminum halides, and must be washed prior to adding the Ti-containing component. Furthermore, the Ti-containing compound must be reacted with another organometallic compound in order to obtain high activity.

European Patent Application 132,288 discloses a solid polymerization catalyst component prepared by reacting an organomagnesium component with a chlorosilane, reacting the solid product with an aldehyde, silanol, hydrosiloxane, alcohol, or thioalcohol, then treating with a transition metal compound. The catalyst is used to produce a polymer having high bulk density while the catalyst has a high efficiency. Unfortunately, the polymer particles sizes produced by this catalyst are very small, generally 105 to 149 microns. It is difficult to handle these fines in conventional polymer processing equipment because they tend to "bridge" and, once suspended in a gas stream, are difficult to disengage from that stream. However, the high bulk density achieved with this invention results from this very small particle size. As pointed out in EP Application 105,278, an increase in catalyst activity results in a reduction in polymer bulk density. This occurs because the polymer particles grow to too large a size. Therefore, it is necessary, in EP Application 132,288, to keep the polymer particle size small in order to achieve the high bulk density.

The catalyst systems comprising magnesium alkyls and titanium compounds, although useful for the polymerization of olefins such as ethylene and other 1-olefins, do not show excellent responsiveness to hydrogen during the polymerization reaction for the control of molecular weight, do not readily incorporate comonomers such as butene-1 for the production of ethylene copolymers, and do not show a high catalytic activity. In particular, these catalysts do not produce a granular polymer product having a high bulk density for resin granules of commercially viable particle size, nor do they teach methods of obtaining such a product. Furthermore, with such catalysts, one obtains polymer product whose film properties are unbalanced under anisotropic conditions.

In accordance with this invention, catalyst combinations have been found which have high catalytic activities, good comonomer incorporation, and excellent hydrogen responsiveness for the control of molecular weight and obtain polymer product with greatly improved film properties. The resins especially exhibit a desirable high bulk density. The resins exhibit excellent melt strength, as well as excellent MD tear strength in excess of 80 g/mil and dart impact strength in excess of 70 g/mil with a 1.0 dg/min and 0.918 g/cc density film.

The catalyst system employing the transition metal containing catalyst component is advantageously employed in a gas-phase ethylene polymerization process. The high bulk density improves transfer of the granules throughout the reactor and associated piping. Furthermore, the product need not be extruded before being sold commercially. It is generally known that resin bulk density increases as resin particle size

decreases and as catalyst activity decreases, thus many catalyst systems are used to produce very fine resins, although at high catalyst activity. This fine material causes difficulties in conveying and requires extrusion before it can be used to produce useful articles. The present invention allows one to control bulk density while producing larger granules, minimizing fines production, and eliminating extrusion costs.

## SUMMARY OF THE INVENTION

In accordance with the objectives of this invention there is provided a transition metal containing catalyst component for the polymerization of alpha-olefins comprising a solid reaction product obtained by contacting (A) the solid obtained by contacting (a) an essentially dry, solid, particulate, porous support material in a hydrocarbon solvent with (b) the reaction products of a (i) magnesium hydrocarbyl or substituted hydrocarbyl or a complex of the magnesium hydrocarbyl or substituted hydrocarbyl with an organometallic compound of a metal of Group IA, IIA, IIB, and IIIA of the Periodic Table and a (ii) polysiloxane, with (B) a halogenating agent, and contacting the treated halogenated product with (C) at least one transition metal compound of a Group IVB, VB, or VIB metal of the Periodic Table.

The solid transition metal-containing catalyst component, when employed in combination with a cocatalyst, such as an alkyl aluminum cocatalyst, provides a catalyst system which demonstrates a number of unique properties that are of importance in olefin polymerization technology. In particular, the polymer bulk density is very high, but in addition, the catalyst exhibits high catalytic activity and the ability to control the molecular weight during the polymerization reaction as a result of the improved responsiveness to hydrogen. The polymer product obtained from the polymerization of olefins and particularly ethylene manifests improved melt strength and tear strength.

In a preferred embodiment of the invention the (i) magnesium compound is dihydrocarbyl magnesium compound represented by $R^1MgX$ wherein $R^1$ is a hydrocarbyl group selected from alkyl, aryl, cycloalkyl, aralkyl, alkaryl, alkadienyl or alkenyl groups having from 1 to 20 carbon atoms, and X, which can be the same or different from $R^1$, is an alkyl, cycloalkyl, alkenyl, aryl, aralkyl, or alkaryl group or a group such as a halide, alkoxide or siloxide. The (ii) polysiloxane is represented by the general formula

$$R^6 - \left[ \begin{array}{c} R^7 \\ | \\ Si - O \\ | \\ R^8 \end{array} \right]_n - \begin{array}{c} R^7 \\ | \\ Si \\ | \\ R^8 \end{array} - R^6 \quad \text{or} \quad \left[ \begin{array}{c} R^7 \\ | \\ Si - O \\ | \\ R^8 \end{array} \right]_k$$

wherein $R^6$, $R^7$, and $R^8$ which can be the same or different, are each a hydrocarbon radical having from 1 to 24 carbon atoms and may be alkyl, alkenyl, aryl, alkaryl, or aralkyl groups, and n is a number from 1 to 1000, preferably 1 to 500 and k ranges from 3 to 20, preferably 4 to 10. The (B) halogenating agent can be a silicon halide, aluminum halide, boron halide, phosphorous halide, tin halide, zinc halide, a halogen, germanium halide, antimony halide and the like.

The (C) transition metal compound is preferably a transition metal compound or combination of transition metal compounds represented by the formulas $TrX'_{4-q}(OR^9)_q$, $TrX'_{4-q}R^{10}_q$, $VO(OR^9)_3$ and $VOX'_3$ wherein Tr is a transition metal of Groups IVB, VB, or VIB metal and preferably titanium, vanadium or zirconium, $R^9$ and $R^{10}$ are alkyl, aryl, aralkyl, or aralkyl groups having from 1 to 20 carbon atoms or 1,3-cyclopentadienyls, X' is halogen and q is zero or a number less than or equal to 4. There are no hydrogen atoms in the $\beta$ position relative to the transition metal when $R^{10}$ is an alkyl group. Mixtures of the transition metal compounds can be employed.

All references to the Periodic Table are to the CAS version of the Periodic Table found in the 66th Edition of The Handbook of Chemistry and Physics, CRC Press [1985-1986].

In accordance with this invention, the ingredients employed in forming the transition metal containing catalyst component are added to the inert solid support material in a specific order. The reaction product of the magnesium compound and the polysiloxane in a suitable solvent are reacted with the dry support, the solid dried, and thereafter treated with the halogenator, and finally treated with the transition metal compound.

In a second embodiment of this invention there is provided a catalyst system comprising the transition metal containing solid catalyst component and an organoaluminum cocatalyst for the polymerization of alpha-olefins using the catalyst of this invention under conditions characteristic of Ziegler polymerizations to produce polymers having a high bulk density.

The catalyst systems can be employed in a gas-phase process, high pressure and temperature single phase process, solution process or slurry process. The catalyst system is usefully employed in the polymerization of ethylene and other alpha-olefins, particularly alpha-olefins having from 3 to 8 carbon atoms and copolymerization of these with other l-olefins or diolefins having from 2 to 20 carbon atoms, such as propylene, l-butene, l-pentene, l-hexene, l,5-hexadiene and the like so as to form copolymers of low and medium densities. The supported catalyst system is particularly useful for the polymerization of ethylene and copolymerization of ethylene with other alpha-olefins in gas-phase processes.

## DESCRIPTION OF PREFERRED EMBODIMENTS

According to the polymerization process of this invention, ethylene, alpha-olefins having 3 or more carbon atoms or ethylene or propylene and other olefins or diolefins are contacted with the catalyst under polymerizing conditions to form a commercially useful polymeric product. The catalyst system is particularly advantageously employed for the production of linear, high density and linear, low density polyethylene.

Typically, the support can be any of the solid particulate porous supports such as silica, alumina, zirconia, thoria, magnesia, and titania. Preferably, the support material is a Group IIA, IIIA, IVA, or IVB metal oxide in finely divided form.

Suitable inorganic oxide materials which are desirably employed in accordance with this invention include silica, alumina, and silica-alumina and mixtures thereof. Other inorganic oxides that may be employed either alone or in combination with the silica, alumina or silica-alumina are magnesia, titania, zirconia, and the like. Other suitable support materials, however, can be employed. For example, finely divided polyolefins such as finely divided polyethylene.

The metal oxides generally contain acidic surface hydroxyl groups which will react with the organometallic composition or transition metal compound first added to the support. Prior to use, the inorganic oxide support is dehydrated, i.e., subject to a thermal treatment in order to remove water and reduce the concentration of the surface hydroxyl groups. The treatment can be carried out in vacuum or while purging with a dry inert gas such as nitrogen at a temperature of about 100°C to about 1000°C, and preferably from about 300°C to about 800°C. Pressure considerations are not critical. The duration of the thermal treatment can be from about 1 to about 24 hours. However, shorter or longer times can be employed provided equilibrium is established with the surface hydroxyl groups.

Chemical dehydration is an alternative method of dehydration of the metal oxide support material which is particularly advantageous in this catalyst system. Chemical dehydration can convert all water and hydroxyl groups on the oxide surface to inert species. Useful chemical agents are, for example $SiCl_4$, chlorosilanes such as trimethylchlorosilane, silylamines and the like. The chemical dehydration is accomplished by slurrying the inorganic particulate material in an inert hydrocarbon solvent, such as, for example, heptane. During the chemical dehydration reaction, the support should be maintained in a moisture-and oxygen-free atmosphere. To the slurry is then added an inert hydrocarbon solution of the chemical dehydrating agent, such as, for example, trimethylchlorosilane. The solution is added slowly to the slurry. The temperature range during the chemical dehydration reaction can be from about 25°C to about 120°C, however, higher and lower temperatures can be employed. Preferably, the temperature will be from about 50°C to about 70°C. The chemical dehydration procedure should be allowed to proceed until all the moisture is removed from the particulate support material, as indicated by cessation of gas evolution. Normally, the chemical dehydration reaction will be allowed to proceed from about 30 minutes to about 16 hours, preferably 1 to 5 hours. Upon completion of the chemical dehydration, the solid particulate material is

filtered under a nitrogen atmosphere and washed one or more times with a dry, oxygen-free inert hydrocarbon solvent. The wash solvents, as well as the diluents employed to form the slurry and the solution of chemical dehydrating agent, can be any suitable inert hydrocarbon. Illustrative of such hydrocarbons are heptane, hexane, toluene, isopentane and the like.

Chemical dehydration is the preferred method of dehydrating the supports in this invention. The best mode has been to treat the supports in this invention. The best mode has been to treat the support with a hydrocarbon slurry of trimethylchlorosilane for about 3 hours at 5O°C. An excess of the dehydrating agent can be used, whereupon washing is preferred after the reaction is complete. If a stoichiometric quantity of dehydrating agent is used, then the washing step may be eliminated before the support is dried.

The preferred (A) organometallic compounds employed in this invention are organomagnesium compounds represented by the formula $R^1MgX_{2-n}$, wherein $O < n \leq 2$, $R^1$ is an alkyl, aryl, cycloalkyl, aralkyl, alkadienyl or alkenyl group, and X, which may be the same or different from $R^1$, is an alkyl, cycloalkyl, alkenyl, aryl, aralkyl, or alkaryl group, or a group such as a halide, alkoxide represented by $-OR^2$ wherein $R^2$ is hydrocarbyl which can be a $C_1$-$C_{20}$ alkyl, cycloalkyl, alkenyl, aryl, aralkyl, or alkaryl group and preferably a $C_2$-$C_{10}$ group, or siloxide of the general formula,

$$\begin{array}{c} R^3 \\ | \\ -O - Si - R^4 \\ | \\ R^5 \end{array}$$

where $R^3$, $R^4$ and $R^5$, which may be the same or different, are defined the same as $R^2$, and in addition, include hydrogen. When both $R^1$ and X are hydrocarbon groups, these groups can contain between I and 2O carbon atoms, preferably from I to about IO carbon atoms. Illustrative, but non-limiting, examples of magnesium compounds which may be suitably employed in accordance with the invention are dialkylmagnesiums such as diethylmagnesium, dipropylmagnesium, di-isopropylmagnesium, di-n-butylmagnesium, di-isobutylmagnesium, diamylmagnesium, dioctylmagnesium, di-n-hexylmagnesium, di-decylmagnesium, and didodecylmagnesium; dicycloalkylmagnesium, such as dicyclohexyl-magnesium, dicyclopentylmagnesium; di-arylmagnesiums such as diphenylmagnesium and dinaphthylmagnesium; dialkarylmagnesiums such as ditolylmagnesium and dixylylmagnesium; and diaralkylmagnesiums such as dibenzylmagnesium.

Preferably, the organomagnesium compounds will have from I to 8 carbon atoms and most preferably $R^1$ and X are different. Illustrative examples are ethylpropylmagnesium, ethyl-n-butylmagnesium, amylhexylmagnesium, n-butyl-s-butylmagnesium, butyloctylmagnesium, and the like. Mixtures of hydrocarbyl magnesium compounds may be suitably employed, such as, for example, dibutyl magnesium and ethyl-n-butylmagnesium.

The hydrocarbon solvent insoluble magnesium hydrocarbyl compounds are generally obtained from commercial sources as mixtures of the magnesium hydrocarbon compounds with a minor amount of aluminum hydrocarbyl compound. The minor amount of the aluminum hydrocarbyl is present in order to facilitate solubilization of the organomagnesium compounds in hydrocarbon solvent.

The organomagnesium complex with a minor amount of aluminum alkyl can be represented by the formula $(R^1MgX)_p(R^{12}_3Al)_s$ wherein $R^1$ and X are defined as above, $R^{12}$ has the same definition as $R^1$ and X, and p is greater than O. The ratio of s/s+p is from O to I, preferably from O to about O.7, and most desirably from about O to O.I.

Illustrative examples of the magnesium aluminum complexes are

$[(n\text{-}C_4H_9)(C_2H_5)Mg][(C_2H_5)_3Al]_{0.02}$,

$[(n\text{-}C_4H_9)_2Mg][(C_2H_5)_3Al]_{0.013}$,

$[(n\text{-}C_4H_9)_2Mg][(C_2H_5)_3Al]_{2.0}$, and

$[(n\text{-}C_6H_{13})_2Mg][(C_2H_5)_3Al]_{0.01}$. A suitable magnesium aluminum complex is Magala® BEM manufactured by Texas Alkyls, Inc.

The organomagnesium-aluminum complexes are known materials and can be prepared by conventional methods. One such method involves, for example, the addition of an appropriate aluminum alkyl to a solid dialkylmagnesium in the presence of an inert hydrocarbon solvent. The organomagnesium-organoaluminum complexes are, for example, described in U.S. Patent No. 3,737,393 and 4,004,071 which are incorporated herein by reference. However, any other suitable method for preparation of organometallic compounds can be suitably employed.

When X is a halogen atom, it may be chlorine, bromine or iodine. Of these, chlorine is preferred.

Illustrative, but non-limiting examples of magnesium-containing compounds for which X is a halogen group are the alkylmagnesium halides such as ethylmagnesium chloride, n-propylmagnesium chloride, neopentyl magnesium chloride, ethylmagnesium bromide, n-butylmagnesium bromide; the cycloalkylmagnesium halides such as cyclopentylmagnesium chloride, cyclohexylmagnesium chloride, and cyclohexylmagnesium bromide; the arylmagnesium halides such as phenylmagnesium chloride, phenylmagnesium bromide, and naphthylmagnesium chloride; the alkenylmagnesium halides such as vinylmagnesium chloride, vinylmagnesium bromide, allylmagnesium chloride, and butenylmagnesium chloride; the alkarylmagnesium halides such as p-tolylmagnesium chloride and xylylmagnesium chlorides; the aralkylmagnesium chlorides such as benzylmagnesium chloride and neophylmagnesium chloride.

Illustrative, but non-limiting examples of magnesium-containing compounds for which X is an alkoxy group follows. The possible hydrocarbyl groups on the magnesium have been illustrated in earlier examples and are not repeated here, since those skilled in the art will recognize that the above magnesium-hydrocarbyl combinations may also be usefully employed in the following examples. Such compounds include alkoxides such as ethylmagnesium ethoxide, ethylmagnesium n-butoxide, ethylmagnesium n-hexyloxide, ethylmagnesium, and ethylmagnesium t-butoxide; such aryloxides as ethylmagnesium phenoxide and ethylmagnesium nephthyloxide; cycloalkoxides such as ethylmagnesium cyclopentyloxide and ethylmagnesium cyclohexyloxide; alkaryloxides such as ethylmagnesium p-tolyloxide and ethylmagnesium xylyloxide; aralkoxides such as ethylmagnesium benzyloxide.

Illustrative, but non-limiting examples of magnesium-containing compounds for which X is a siloxy group include the alkyl siloxides such as ethylmagnesium trimethysiloxide, ethylmagnesium triethylsiloxide, ethylmagnesium dimethylethylsiloxide, ethylmagnesium methyldiethylsiloxide, and ethylmagnesium tri-n-butylsiloxide; alkyl hydrosiloxides such as ethyl magnesium dimethylhydrosiloxide, ethylmagnesium methyldihydrosiloxide, ethylmagnesium diethylhydrosiloxide, and ethylmagnesium di-n-butyl hydrosiloxide; cycloalkylsiloxides such as ethylmagnesium tricyclopentylsiloxide and ethylmagnesium tricyclohexylsiloxide; arylsiloxides, arylhydrosiloxides, and arylalkyl siloxides such as ethylmagnesium triphenylsiloxide, ethylmagnesium diphenylhydrosiloxide, ethylmagnesium phenyldihydrosiloxide, ethylmagnesium diphenylmethylsiloxide, ethylmagnesium phenyldimethylsiloxide, and ethylmagnesium phenylmethyl hydrosiloxide; alkarylsiloxides such as ethylmagnesium tri-tolylsiloxide and ethylmagnesium tri-xylylsiloxide; and aralkylsiloxides such as ethylmagnesium tri-benzylsiloxide.

It is desirable to employ magnesium alkyls which are hydrocarbon solvent soluble which are not complexed with aluminum alkyls. Illustrative of such hydrocarbon soluble magnesium alkyls are (n-butyl)-(sec-butyl)magnesium, di(n-hexyl)magnesium, (n-butyl)(n-hexyl)magnesium, and the like.

The polysiloxanes which can be employed in accordance with this invention are represented by the generic formula

$$R^6 - \left[ \begin{array}{c} R^7 \\ | \\ Si - O \\ | \\ R^8 \end{array} \right]_n - \begin{array}{c} R^7 \\ | \\ Si \\ | \\ R^8 \end{array} - R^6$$

where $1 \leq n \leq 1000$. Cyclic polysiloxanes, as represented by the formula,

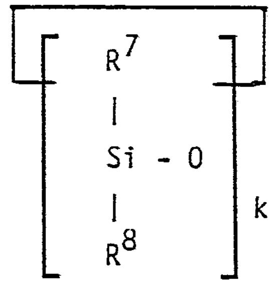

wherein k ranges from 3 to 20, preferably 4 to 10, may also be used in accordance with this invention.

In the above generic formulas, $R^6$, $R^7$ and $R^8$, which may be the same or different, are alkyl, alkenyl, cycloalkyl, aryl, aralkyl and alkaryl groups. Illustrative, but non-limiting examples of polysiloxanes are alkylsiloxanes such as polydimethylsiloxanes, polydiethylsiloxanes, polymethylethylsiloxanes, polymethylbutylsiloxanes, and the like; arylsiloxanes such as dipolydiphenylsiloxanes, and the like; alkarylsiloxanes such as polyditolylsiloxanes and polydixylylsiloxanes, and the like; polyaralkylsiloxanes such as polydibenzylsiloxanes, and the like, and cyclic siloxanes such as octamethylcyclotetrasiloxane, nexamethylcyclotrisiloxane, tetramethyltetraphenylcyclotetrasiloxane, and the like.

Either linear or branched polysiloxanes with trialkylsilane capped ends may also be used. It is desirable that the siloxanes have viscosities in the range of about 0.5 to 10,000 cSt.

The halogenating agents which are particularly suitable include silicon halides, boron halides, phosphorus halides, tin halides, aluminum halides and zinc halides. Hydrocarbon halides have not been found to be suitable in this invention.

Particularly suitable are the silicon halides represented by the formula $X_mSiR^{13}_{4-m}$ wherein m can be 1 to 4, X is a halogen such as chlorine, bromine, or iodine and $R^{13}$ is a hydrogen or alkyl, alkenyl, aryl, aralkyl, or alkaryl group having from 1 to 20 carbon atoms.

Illustrative examples of the silicon halides are silicon tetrachloride, trimethylchlorosilane, dimethyldichlorosilane, dimethylchlorosilane, dichlorosilane, trichlorosilane, ethyltrichlorosilane, diethyldichlorosilane, triethylchlorosilane, propyltrichlorosilane, dipropyldichlorosilane, tripropylchlorosilane, and trichlorovinyl silane. Other suitable silanes include methyl ethyl dichlorosilane, methylhexyldichlorosilane, diphenylchlorosilane, phenyltrichlorosilane, and the like.

The aluminum halides are represented by the formula $R_sAlX_{3-s}$ wherein s is a positive number from 1 to 2 and R is an alkyl group having from 1 to 20 carbon atoms. Illustrative of the aluminum halides which may be suitably employed in accordance with the invention are diethylaluminum chloride, ethylaluminum dichloride, ethylaluminum sesquichloride, isobutylaluminum chloride, diisobutylaluminum chloride, hexylaluminum dichloride, dihexylaluminum chloride, hexylaluminum sesquichloride, and the like.

Other illustrative halides include boron halides such as boron trichloride, diethyl boron chloride, ethyl boron dichloride, dibutylboron chloride, butyl boron dichloride, diphenylboron chloride, phenylboron dichloride, and the like; phosphorus halides such as phosphorus pentachloride, phosphorus trichloride, diethyl chlorophosphine, ethyldichlorophosphine, dibutylchlorophosphine, butyldichlorophosphine, diphenylchlorophosphine, phenyl dichlorophosphine, and the like; tinhalides such as tin tetrachloride, triethyl tin chloride, diethyltin dichloride, ethyltin tricyloride, tributyltin chloride, dibutyltin dichloride, butyltin trichloride, triphenyltin chloride, diphenyltin dichloride, phenyltin trichloride, and the like; and zinc halides such as zinc chloride, ethylzinc chloride, butylzinc chloride, phenylzinc chloride, and the like.

In accordance with the invention the silicon halides are particularly preferred and especially trichlorosilane and methyl trichlorosilane.

The transition metal compounds which can be usefully employed in the preparation of the transition metal containing catalyst component of this invention are well known in the art.

Illustrative examples of the transition metal compounds include titanium-containing compounds such as $TiCl_4$, $TiBr_4$, $Ti(OC_2H_5)_3Cl$, $Ti(OC_2H_5)Cl_3$, $Ti(OC_2H_5)_2Cl_2$, $Ti(OC_4H_9)_3Cl$, $Ti(OC_3H_7)_2Cl_2$, $Ti(OC_6H_{13})_2Cl_2$, $Ti(OC_8H_{17})_2Br_2$, and $Ti(OC_{12}H_{25})Cl_3$, titanium tetraisopropoxide, titanium tetrabutoxide; vanadium-containing compounds such as $VCl_4$, $VOCl_3$, $VO(OC_2H_5)_3$, $VO(O\text{-}n\text{-}C_4H_9)_3$, $VO(O\text{-}i\text{-}C_3H_7)_3$, vanadyl tri-2-ethylhexanolate, $VO(OC_2H_5)_2Cl$, $VO(OC_2H_5)Cl_2$, and the like; and zirconium compounds such as $ZrCl_4$, $Zr(O\text{-}i\text{-}C_3H_7)_4$, $Zr(OC_2H_5)_4$, $ZR(OC_2H_5)_3Cl$, $Zr(OC_2H_5)_2Cl$, $Zr(OC_2H_5)Cl_3$, $Zr(O\text{-}n\text{-}C_4H_9)Cl_3$, $Zr(O\text{-}n\text{-}C_4H_9)_2Cl_2$, and the like. Of the Group IVB, VB and VIB transition metals, titanium, vanadium and zirconium are preferred, with titanium being especially preferred.

As indicated above, mixtures of the transition metal compounds may be usefully employed with no restriction being imposed on the number of transition metal compounds which may be reacted with the organometallic composition. Any halogenide and alkoxide transition metal compounds in Groups IVB, VI and VIB, or mixtures thereof, can be usefully employed. The titanium tetrahalides are especially preferred, with titanium tetrachloride being most preferred.

The treatment of the support material as mentioned above can be conducted in an inert solvent. The inert solvents can also be usefully employed to dissolve the individual ingredients prior to the treatment step. Preferred solvents include mineral oils and the various hydrocarbons which are liquid at reaction temperatures and in which the individual ingredients are soluble. Illustrative examples of useful solvents include the alkanes such as pentane, iso-pentane, hexane, heptane, octane, and nonane; cycloalkanes such as cyclopentane, cyclohexane; and aromatics such as benzene, toluene, ethylbenzene and diethylbenzene. The amount of solvent employed is generally not critical. Nevertheless, the amount employed should be sufficient so as to provide adequate heat transfer away from the catalyst components during reaction and to permit good mixing.

However, it is preferred to prepare the solid catalyst component using the minimum amount of solvent necessary to wet the support thoroughly and provide sufficient liquid for good stirring and mixing. Thus, treatment of the dry, inert particulate support with the reaction product of the magnesium compound with the polysiloxane is most preferably done in that amount of solvent, such that the total volume added is equal to the pore volume of the support being treated plus that extra amount of liquid needed to wet the exterior of the particles, fill the interstices between particles, and provide enough liquid such that stirring can be easily accomplished. The volume of the interstices is typically about 40% of the overall volume which the support occupies.

It is preferable to minimize the amount of solvent when treating with the magnesium compound - polysiloxane reaction product in order to ensure uniformity of distribution throughout the support. If the amount of solvent is too large, then too large a fraction of the product is outside of the pores of the support and subsequently deposits on the external surface after drying. If the amount of solvent is too little, then there is interparticle inhomogeneity with some particles supporting much more of the magnesium compound-polysiloxane reaction product. When the minimum amount of solvent is used, the product is uniformly deposited in the pores of the support and drying occurs rapidly. The result is a free liquid in the pores of the support with only weak interaction with the pre walls. This has been demonstrated by $^{13}C$ NMR which showed no difference between carbon atoms on the polysiloxane when the sample was not spun and when the sample was examined by magic angle spinning. This is characteristic of bulk liquids, but the solid appeared to be dry, free flowing, and non-sticky.

The amount of solvent used in other steps of the catalyst preparation should also be minimized as described above. The advantages described therein also pertain to those steps.

Polar solvents such as ethers can also be used in this invention. Various magnesium compounds containing a magnesium carbon bond will not dissolve in inert hydrocarbons such as hexane, so polar solvents are needed to facilitate solution. Such solvents include diethyl ether, tetrahydrofuran, furan, p-dioxane, m-dioxane, dipropylether, di-n-butylether, di-isoamyl ether, and the like.

In accordance with this invention it is highly desirable that the reaction product of the magnesium alkyl and the polysiloxane in the presence of the silica be dried prior to treatment with the halogenating agent. Drying can be accomplished by means well known in the art, for example, through passage of an inert gas such as argon or nitrogen over the sample at elevated temperature, evacuating the sample at temperatures ranging from about -30°C to about 120°C. Most preferably, the sample is dried by passage of an inert gas over the solid at a temperature sufficient to permit rapid evolution of the solvent, but sufficiently low to allow the polysiloxane to remain in the pores of the support. More specifically, the evolving solvent should not evolve so rapidly that it forces the siloxane from the support pores. In particular, evacuation of the support is only marginally successful for drying, unless the rate of solvent evolution is controlled by controlling the vacuum.

It should be noted that the support should not be washed following treatment with the magnesium compound-polysiloxane reaction product. This material is not permanently deposited onto the support and will be removed if the support is washed at this stage. The support can generally be washed with an inert solvent after treatment with the halogenating agent or with the transition metal containing compound. Suitable solvents for washing the support are inert hydrocarbons such as pentane, hexane, heptane, benzene, toluene, and the like.

The dried recovered product is then contacted with the halogenating agent. The halogenating agent is added to the dry solid in a suitable solvent which may be the same or different from solvents listed above. The temperature employed during the addition of the halogenating agent to the dry solid can be in the range of -3O°C to I5O°C and preferably I5°C to 5O°C. Typically, the halogenating agent is added to the dry solid at room temperature.

The amounts of materials usefully employed in the solid catalyst component can vary over a wide range. The concentration of the magnesium compound-polysiloxane based on the magnesium content deposited on the essentially dry, support can be in the range from about O.O5 to about IO mmoles/g of support, however, greater or lesser amounts can be usefully employed. Preferably, the concentration is in the range of O.5 to 8 mmoles/g of support and more preferably in the range of I.O to 5 mmoles/g of support. The magnesium alkyl to the polysiloxane molar (Mg/O) where O is the number of moles of oxygen present in the siloxane) ratio can be in the range of from about O.O5 to about I. Preferably the ratio is in the range of O.O8 to O.3 and more preferably in the range of O.IO to O.2.

The magnesium compound and the polysiloxane are added to the support material in any order. Most preferably, the magnesium compound and polysiloxane are mixed together and then added to the dry support. However, it is possible to add the two materials simultaneously to the dry support. When mixed prior to addition to the support, the magnesium compound and the polysiloxane are allowed to react from O to IOO hours, preferably O to 2O hours, and most preferably O to 3 hours. The reaction between the siloxane, the magnesium compound and the support material can be maintained from O.5 hours upward to about 48 hours or more. Generally, the reaction is maintained at room temperature with constant stirring.

The molar ratio of the halogen in the halogenating agent to the magnesium in the solid can be in the range of I.O to 5.O. Preferably, the amount of halogen added is in the range of I.5 to 3 and most preferably the molar ratio is about 2.

The transition metal compound is added to the inert support at a concentration of about O.OI to abqut 2 mmoles Ti/g of dried support, preferably in the range of about O.I to about I.5 mmoles Ti/g of dried support and especially in the range of about O.2 to I mmoles Ti/g of dried support.

Generally, the individual reaction steps can be conducted at temperatures in the range of about -3O°C to about I5O°C with -I5°C to about 5O°C being most preferred. The reaction time for the individual treatment steps can range from about 5 minutes to about 24 hours. Preferably the reaction time will be from about I/2 hour to about 8 hours. During the reaction constant agitation is desirable.

The catalyst components prepared in accordance with this invention are usefully employed with cocatalysts well known in the art of the Ziegler catalysis for polymerization of olefins. Typically, the cocatalysts which are used together with the transition metal containing catalyst component are organometallic compounds of Group IA, IIA, and IIIA metals such as aluminum alkyls, aluminum alkyl hydrides, lithium aluminum alkyls, zinc alkyls, magnesium alkyls and the like. The cocatalysts preferably used are the organoaluminum compounds. The preferred alkylaluminum compounds are represented by the formula $AlR'''_nX''_{3-n}$ wherein R''' is hydrogen, hydrocarbyl or substituted hydrocarbyl group, X'' is a halogen and $I \leq n \leq 3$. Preferably, R''' is an alkyl group having from 2 to IO carbon atoms. Illustrative examples of the cocatalyst material are ethylaluminum, dichloride, ethylaluminum sesquichloride, diethylaluminum chloride, triethyl aluminum, tri-n-butyl aluminum, triisobutylaluminum, diisobutyl aluminum hydride, diethylaluminum ethoxide and the like. Aluminum trialkyl compounds are most preferred with triisobutylaluminum and triethyl aluminum being highly desirable.

The amount of organometallic cocatalyst used with the solid transition metal-containing catalyst component is in the range of about IO mole or organometallic cocatalyst per mole of transition metal to about I,OOO moles per mole of transition metal, more typically ranging from 2O to 3OO, and preferably in the range of 5O to IOO. The amount of cocatalyst used is dependent on the operating conditions in the reactor, the purity of the feeds to the reactor, and upon the amounts of impurity allowed in the product.

The catalyst comprising the aluminum alkyl cocatalyst and the transition metal containing solid catalyst component is usefully employed for the polymerization of ethylene, other alpha-olefins having from 3 to 2O carbon atoms, such as for example, propylene, butene-I, pentene-I, hexene-I, 4-methylpentene-I, and the like and ethylene copolymers with other alpha-olefins or diolefins such as I,4-pentadiene, I,5-hexadiene, butadiene, 2-methyl-,3-butadiene and the like. The polymerizable monomer of preference is ethylene. The catalyst system may be usefully employed to produce polyethylene or copolymers of ethylene by copolymerizing with other alpha-olefins or diolefins, particularly propylene, butene-I, pentene-I, hexene-I, and octene-I. The catalyst is especially useful for the catalytic production of LLDPE. The olefins can be polymerized in the presence of the catalyst of this invention by any suitable known process, such as, for example, suspension, solution and gas-phase polymerization processes.

The polymerization reaction employing catalytic amounts of the above-described solid catalyst can be carried out under conditions well known in the art of Ziegler polymerization, for example, in an inert diluent at a temperature in the range of 50°C to 120°C and a pressure of 1 to 40 atmospheres or in the gas-phase at a temperature range of 70°C to 100°C at about 1 atmosphere to 50 atmospheres and upward. Illustrative of the gas-phase processes are those disclosed in the U.S. Patent Nos. 4,302,565 and 4,302,566 which references are incorporated by reference. As indicated above, one particularly advantageous property of the catalyst system of this invention is the production of a polymer product having a high bulk density. Typically, a polymer produced in accordance with this invention will have a bulk density in the range of 0.35 to 0.46 g/cc and advantageously 0.43 to 0.46 g/cc. The catalyst system can also be used to polymerize olefins at single phase conditions, i.e., 150°C to 320°C and 1,000 to 3,000 atmospheres. At these conditions, the catalyst lifetime is short but the activity sufficiently high that removal of catalyst residues from the polymer is unnecessary. However, it is preferred that the polymerization be done at pressures ranging from 1 to 50 atmospheres, preferably 5 to 25 atmospheres.

In the processes according to this invention, it has been discovered that the catalyst system is highly responsive to hydrogen for the control of molecular weight. Other well known molecular weight controlling agents and modifying agents, however, may be usefully employed.

The polyolefins prepared in accordance with this invention can be extruded, mechanically melted, cast or molded as desired. They can be used for plates, sheets, films and a variety of other objects.

While the invention is described in connection with the specific examples below, it is understood that these are only for illustrative purposes. Many alternatives, modifications and variations will be apparent to those skilled in the art in light of the below examples and such alternatives, modifications and variations fall within the general scope of the claims.

In the Examples following, the silica support was prepared by placing the silica gel in a vertical column and fluidizing with an upward flow of $N_2$. The column was heated slowly to 800°C and held at that temperature for 12 hours after which the silica was cooled to ambient temperatures.

The melt index (MI) and melt index ratio (MIR) were measured in accordance with ASTM test D1238. The resin bulk density was determined by averaging the results of 3 measurements done by pouring a 115 cc sample through a plastic funnel into a 100 cc plastic cylinder (2.6 cm internal diameter × 19.0 cm high). The funnel was situated 1" above the cylinder. The sample was poured into the funnel which was blocked at the bottom, then allowed to fall into the cylinder. Excess was scraped off. The sample was weighed and the bulk density calculated.

The resin density was determined by density gradient column according to ASTM test D 1505. The films were produced on a typical blown film line using a 2.5 inch extruder with a 6 inch die. The die gap was 120 mil and the film was drawn to 1.25 mil with an 18 inch frost line height. Die throughput was 9.5 lb/hr/inch die circumference.

## Example I

### Catalyst Preparation

The silica used as a support was a microspheroidal silica gel which had been dehydrated at 800°C for 5 hours. It had a pore volume of 1.58 ml/g of silica, a surface area of about 300 m²/g, an average particle size of 46.9 microns, and a narrow particle size distribution (10 wt % of the particles were less than 15 microns in diameter and 90 wt % of the particles were less than 78 microns in diameter). 2.0 grams of this silica were placed in a clean, dry, oxygen-free 50 ml vial containing a stirring bar.

Into a clean, dry oxygen-free 30 ml vial containing a stirring bar was placed 9.23 ml of hexane, 4.75 ml of a 10 cSt polydimethylsiloxane (PDMS) capped with trimethylsilyl groups at the chain ends, and 12.70 ml of a 9.9% butylethylmagnesium (BEM) solution in heptane. This mixture was allowed to react for 1 hour at room temperature while stirring.

10.0 ml of the BEM/PDMS solution was slowly added to the vial containing the dehydrated silica. As the silica became wet, it was carefully and slowly stirred so as not to grind the dry silica and change its morphology or particle size distribution. An additional 5 ml of hexane was added to the vial to ensure complete wetting of the silica. The sample was then stirred for 1 hour at room temperature. After 1 hour of mixing, the sample was carefully dried under flowing nitrogen at 50°C. The sample was carefully stirred during this drying to ensure even distribution of the BEM/PDMS product throughout the pore volume of the support. The sample dried to a free-flowing powder within 2 hours.

20 ml of a 0.10 mmole/ml trichlorosilane solution in hexane was added to the dry solid at room temperature as it was slowly stirred. After the addition was complete, the sample was stirred for 1 hour at room temperature. After 1 hour, 1.6 ml of a 0.5 mmole/ml solution of $TiCl_4$ in hexane was added to the sample at room temperature. The sample was then carefully dried under flowing nitrogen at 50°C while stirring carefully. The sample dried to a free-flowing powder containing 0.90% Ti by weight within 2 hours.

Polymerization

A 2.2 liter autoclave reactor was used for catalyst testing. The freshly cleaned autoclave was heated to 120°C and flushed with purified nitrogen for 30 minutes. It was then cooled to room temperature. 850 ml of dry, oxygen-free hexane was added. 2.2. ml of a 10% (w/w) solution of tri-isobutylaluminum in heptane (TIBAL) was injected into the reactor. The reactor was then heated to 85°C. 105 mmoles of hydrogen and 20 ml of butene-1 were added to the reactor. The reactor was then pressured to 150 psig with dry, oxygen-free ethylene. The polymerization of ethylene was then started by injecting 100 mg of the dry solid prepared in Example 1. The pressure in the reactor was maintained at 150 psig by feeding ethylene as it was taken up during the polymerization.

The reaction was allowed to proceed for 80 minutes. At the end of that time, the ethylene was shut off and the reactor rapidly cooled to room temperature. The reactor was vented to 1 atmosphere and opened. The hexane slurry of polyethylene was poured into a 1 liter crystallizing dish and the hexane allowed to evaporate. 127.1 grams of resin was produced in the polymerization.. The resin had a spherical morphology and a high bulk density. The resin properties and the activity of the catalyst are shown in Table 1.

Examples 2 - 6

These examples, along with Example 1 above, show how varying the loading of the magnesium compound, polysiloxane, halogenating agent, and $TiCl_4$ while keeping the composition of the material constant in the pores of the support influences the bulk density of resin produced by the catalyst.

Two samples of the solution of the BEM/PDMS reaction product was prepared as described in Example 1 above, except that the quantities used were 34.6 ml of hexane, 17.8 ml of a 10 cSt polydimethylsiloxane (PDMS) capped with trimethylsilyl groups at the chain ends, and 47.6 ml of a 9.9% butylethylmagnesium (BEM) solution in heptane.

The catalysts were prepared by the same method described in Example 1, but with the quantities of reagents shown in Table 2. The molar ratios of Mg/Ti and Mg/O (in the PDMS) and Mg/Cl (in the $SiHCl_3$) were kept constant at 3.80, 0.13, and 0.50 respectively. Therefore, the composition of the active material in the pores of the support was kept constant, only the volume of material in the pores changed.

The catalysts were tested under the same conditions as Example 1 except that the polymerizations were conducted for 60 minutes. The results of the polymerizations, including the results of Example 1 for comparison, are shown in Table 1.

Comparative example 1

The following example shows the effect of the support on controlling the bulk density of resin produced by the catalyst.

A catalyst was prepared as described in Example 1 except that no support was used, i.e., the $SiHCl_3$ was added directly to the appropriate quantity of BEM/PDMS reaction product, and no drying steps were used. The catalyst was tested in a manner identical to that described in Example 1. The results are shown in Table 3.

Comparative Example 2

The following example shows the effect of adding the $TiCl_4$ before adding the chlorinating agent in the catalyst preparation.

A catalyst was prepared as described in Example I except that the $TiCl_4$ was added first to the dry silica impregnated with the BEM/PDMS reaction product, then the appropriate quantity of $SiHCl_3$ was added. The catalyst was tested in a manner indentical to that described in Example I. The results are shown in Table 3.

## Comparative Example 3

The following example shows the effect of eliminating the BEM and using only the PDMS in the silica. This was done to test whether the $TiCl_4$ is reacting with the PDMS alone, and to demonstrate that the magnesium alkyl is an essential part of the catalyst.

A catalyst was prepared as described in Example I except that the $TiCl_4$ was added first to the dry silica impregnated with only PDMS, then the appropriate quantity of $SiHCl_3$ was added. The catalyst was tested in a manner indentical to that described in Example I. The results are shown in Table 3.

## Comparative Example 4

The following example shows the effect of eliminating the PDMS and using only the BEM in the silica. An inert, higher molecular weight hydrocarbon (Isopar® L from Exxon Chemical Company) was substituted for the PDMS.

A catalyst was prepared as described in Example I except that the dry silica was first impregnated with a mixture of hexane, Isopar L, and BEM rather than the BEM/PDMS reaction product. The catalyst was tested in a manner identical to that described in Example I. The results are shown in Table 3.

## Comparative Example 5

The following example shows the effect of premixing the chlorinating agent and the Ti containing compound.

A catalyst was prepared as described in Example I except that the dry silica was treated with a mixture of $TiCl_4$ and $SiHCl_3$ rather than the two components separately. The catalyst was tested in a manner identical to that described in Example I. The results are shown in Table 3.

## Comparative Example 6

The following example shows the effect of adding the chlorinating agent to the silica mixed with the BEM/PDMS reaction product without first drying the slurry to a free-flowing powder.

A catalyst was prepared as described in Example I except that the $SiHCl_3$ was added to the slurry of silica and BEM/PDMS without first drying the support under flowing nitrogen. The catalyst was tested in a manner identical to that described in Example I. The results are shown in Table 3.

## Examples 7 - 12

The silica used as a support in these examples was a microspheroidal silica gel which was chemically dehydrated with chlorotrimethylsilane ($SiCl(CH_3)_3$). The silica was the same as that used in Example I. 15.0 grams of this silica were placed in a clean, dry, oxygen-free 250 ml Schlenk flask equipped with a dropping funnel and containing a stirring bar. The silica was slurried in 150 ml of dry, oxygen-free heptane and heated to 70°C. A bubbler was attached to the sidearm of the flask in order to allow evolved gases to escape. 26.7 ml of neat chlorotrimethylsilane was added dropwise. The sample was then stirred for 3 hours at 70°C. The sample was cooled to room temperature and washed 6 times with 50 cc aliquots of hexane. It was then dried under vacuum in a nitrogen containing dry box.

Examples 7 through 12 were all prepared by the procedures described in Example 1, except that the quantities of BEM/PDMS reaction product originally prepared differed somewhat. For Example 10, the 30 ml vial contained 9.23 ml of hexane, 4.75 ml of a 10 cSt polydimethylsiloxane (PDMS) capped with trimethylsilyl groups at the chain ends, and 12.70 ml of a 9.9% butylethylmagnesium (BEM) solution in heptane. For the other examples, the BEM/PDMS solution was made in aliquots containing 34.6 ml of hexane, 17.8 ml of a 10 cSt polydimethylsiloxane (PDMS) capped with trimethylsilyl groups at the chain ends, and 47.6 ml of a 9.9% butylethylmagnesium (BEM) solution in heptane.

The catalysts were prepared by the same method described in Example 1, but with the quantities of reagents shown in Table 4. The molar ratios of Mg/Ti and Mg/O (in the PDMS) and Mg/Cl (in the $SiHCl_3$) were kept constant at 3.80, 0.13, and 0.50 respectively. Therefore, the composition of the active material in the pores of the support was kept constant, only the volume of material in the pores changed.

The catalysts were tested under the same conditions as Example 1 except that the polymerizations were conducted for 60 minutes. The results of the polymerizations, including the results of Example 1 for comparison, are shown in Table 5.

## Comparative Example 7

This example shows the results of eliminating the chlorinating agent during the catalyst preparation.

30 grams of the silica used in Example 1 was dehydrated at 200°C under flowing nitrogen for 5 hours. 20 grams of this sample was placed in a clean, dry, oxygen-free 500 ml vial containing a stirring bar and slurried in 200 ml of dry, oxygen-free hexane. The vial was equipped with a bubbler in order to allow evolved gases to escape. The sample was heated to 60°C. 50 ml of a 1.0 mmole/ml solution of dimethyldichlorosilane was added slowly over 1 hour. The sample was then stirred for 3 hours at 60°C. After the stirring was complete, the liquid was decanted and the sample washed 3 times with 200 ml aliquots of n-pentane. The sample was dried under flowing nitrogen at 50°C.

2.0 grams of the chemically dehydrated silica was placed in a clean, dry, oxygen-free 50 ml vial containing a stirring bar. A BEM/PDMS reaction product was prepared as described in Examples 2 through 7. 10.0 ml of the BEM/PDMS solution was added slowly to the support while stirring carefully. An additional 5.0 ml of dry, oxygen-free hexane was added to ensure thorough wetting of the support. The sample was stirred for 1 hour at room temperature. The slurry was then carefully dried at 50°C under flowing nitrogen. A free-flowing white solid resulted.

20 ml of a 0.04 mmole/ml solution of $TiCl_4$ in pentane was then slowly added to the dry solid at room temperature while carefully stirring. The sample was then stirred for 1 hour at room temperature. The sample was then dried at 50°C under flowing nitrogen until it was a free-flowing powder.

The catalyst was tested under the same conditions as Example 1 except that the polymerizations were conducted for 60 minutes. The results of the polymerization are shown in Table 4.

## Examples 13 - 16

The following examples demonstrate the effects that changing the siloxane molecular weight have on the performance of the catalyst. A magnesium alkyl-PDMS reaction product was prepared by mixing 5.19 ml of dry, oxygen-free hexane, 7.14 ml of 9.9 wt % BEM in heptane, and 2.67 ml of the appropriate PDMS for 1 hour at room temperature. The samples were used immediately after reacting the BEM and PDMS. The molecular weights of the different siloxanes used are shown in Table 6.

The catalysts were then prepared exactly as described in Example 1 except that 10 ml of a 0.20 mmole/ml solution of $SiHCl_3$ in pentane was added at 40°C instead of 20 ml of a 0.1 mmole/ml solution of $SiHCl_3$ in hexane added at room temperature.

The catalysts were tested under the same conditions as Example 1 except that the polymerizations were conducted for 60 minutes. The results of the polymerizations are shown in Table 6.

Examples 17 - 19

The following examples demonstrate the use of siloxanes having phenyl groups substituted for the methyl groups in the previous examples. The magnesium alkyl-siloxane reaction product was prepared by mixing 5.16 ml of dry, oxygen-free hexane, 7.14 ml of 9.9 wt % BEM in heptane, and the weight of the specific siloxane shown in Table 7 for 1 hour at room temperature. The abbreviations used are as follows: HPDS (hexaphenyldisiloxane), TPDMDS (tetraphenyldimethyldisiloxane), and DPTMDS (diphenyltetramethyldisiloxane). The samples were used immediately after reacting the BEM and siloxane.

Catalysts were then prepared exactly as described in Example 1 except that 10 ml of a 0.20 mmole/ml solution of $SiHCl_3$ in hexane was added at room temperature instead of 20 ml of a 0.1 mmole/ml solution of $SiHCl_3$ in hexane.

The catalysts were tested under the same conditions as Example 1 except that the polymerizations were conducted for 60 minutes. The results of the polymerizations are shown in Table 7.

Example 20

A magnesium alkyl-OMCTS (octamethylcyclotetrasiloxane) reaction product was prepared by mixing 4.94 ml of dry, oxygen-free hexane, 7.36 ml of 9.9 wt % BEM in heptane, and 2.70 cc of OMCTS for 1 hour at room temperature. The sample was used immediately after reacting the BEM and siloxane. The catalyst was prepared exactly as described in Example 1 except that 10 ml of a 0.20 mmole/ml solution of $SiHCl_3$ in hexane was added at room temperature instead of 20 ml of a 0.1 mmole/ml solution of $SiHCl_3$ in hexane.

The catalyst was tested under the same conditions as Example 1 except that the polymerizations were conducted for 60 minutes. The results of the polymerization is shown in Table 7.

Examples 21 - 26

The following examples demonstrate the use of different magnesium compounds with this invention. The magnesium compound-siloxane reaction product was prepared by mixing dry, oxygen-free solvent, the specified magnesium compound solution, and the 5.34 cc of a 10 cSt polydimethylsiloxane as specified in Table 8 for 1 hour at room temperature. The samples were used immediately after the mixing was complete.

Catalysts were then prepared and tested as described in Example 13. The results of the polymerizations are shown in Table 9.

Examples 27 - 29

The following examples demonstrate the use of different titanium compounds with this invention. $TiCl(OBu)_3$ was prepared by mixing 12.76 g of $Ti(OBu)_4$ with 2.37 g of $TiCl_4$ and heating for 3 hours at 60°C. $TiCl_2(OBu)_2$ was prepared by mixing 8.51 g of $Ti(OBu)_4$ with 4.74 g of $TiCl_4$ and heating for 3 hours at 60°C. Sufficient quantities of both compounds as well as $TiCl_4$ were diluted with clean, dry, oxygen-free to prepare 25 cc quantities of a 0.5 mmole/ml solution of each in hexane. Catalysts were then prepared and tested as described in Example 13. The results of the polymerizations are shown in Table 10.

Examples 30 - 36

The following examples demonstrate the use of different chlorinating agents with this invention. Hexane solutions of the chlorinating agents shown in Table 11, except for chlorine gas, were prepared at a concentration of 0.2 mmole/ml. Catalysts described in Examples 30 through 34 were then prepared and tested as described in Example 13. The results of the polymerizations are shown in Table 11.

Examples 35 and 36 were prepared as described in Example 1, except that the samples were chlorinated by flowing a 10% by volume mixture of chlorine and nitrogen over the dried silica/BEM/PDMS reaction product at room temperature for the time specified in Table 11 instead of adding $SiHCl_3$. After the chlorine addition was complete, the vials were flushed with nitrogen for 10 minutes at room temperature. 16.0 ml of a 0.05 mmole/ml solution of $TiCl_4$ was then added to each sample at room temperature and

stirred for I hour. The remainder of the preparation was identical to that described in Example I. Polymerizations using these samples were then conducted in a manner identical to that described in Example I3. The results are shown in Table II.

Example 37

The following example demonstrates the utility of gas phase polymerization using the catalyst described in this invention for producing a high bulk density resin.

Catalyst Preparation

The silica used as a support was a microspheroidal silica gel which has been dehydrated at 80°C for 5 hours under flowing nitrogen. It had a pore volume of I.58 ml/g of silica, a surface area of about 300 $m^2/g$, an average particle size of 46.9 microns, and a narrow particle size distribution (IO wt% of the particles were less than I5 microns in diameter and 90 wt% of the particles were less than 78 microns in diameter). 884.3 grams of this silica were placed in a clean, dry, oxygen-free 2 gallon mixer and slurried in 2500 ml of dry, oxygen-free isopentane. 48.I g of neat trimethylchlorosilane was added to the slurry over I5 minutes at 35°C while stirring. The slurry was stirred for 3 hours at 35°C at I2O rpm. The sample was then dried under flowing nitrogen at 6O°C until a free-flowing powder resulted.

To the dried support was added 2839 ml of a solution consisting of 304 ml of a IO cSt PDMS, 8I4 ml of 9.9% BEM in heptane, and I72I ml of isopentane. This solution was prepared by adding the BEM to the isopentane, followed by adding the PDMS to that mixture at 35°C and stirring for 3 hours. The support was stirred with the BEM/PDMS reaction products to I hour 35°C at I2O rpm. The support was then dried by heating the mixture to 46°C and allowing the isopentane to evaporate. After the slurry had dried to a sticky mud, the temperature was increased to 6O°C and nitrogen was passed over the sample in order to evaporate the remaining heptane. The support became a free-flowing powder within 2 hours.

To the dry sold was added I768 ml of a 0.497 mmole/ml solution of $SiHCl_3$ in isopentane over a I5 minute period. The slurry was then stirred for I hour at 35°C at I2O rpm. After I hour, 39.I ml of $TiCl_4$ were added to the slurry at 35°C over a I5 minute period. The slurry was then stirred for I hour at 35°C at I2O rpm. The solid was then dried by raising the temperature to 46°C for about 8O minutes in order to allow the isopentane to evaporate to an extent that a mud was observed in the reactor. At that point the temperature was raised to 6O°C and nitrogen flow begun in order to evaporate the remaining isopentane and produce a dry, free-flowing solid. After 7O minutes, I654 grams of final catalyst was recovered. The catalyst contained 0.87 wt% Ti, I.6I wt% Mg, and 7/36 wt% Cl.

Polymerization Results

The polymerization was conducted in a 36 inch diameter fluidized bed polymerization reactor operating at 82°C and a pressure of 300 psig. The gas phase composition was 35.5 mole % ethylene, 7.3 mole % hydrogen, I5.3 mole % butene-I, and 42.I mole % nitrogen. The gas was circulated at a superficial velocity of I.6 ft/sec/ The catalyst feed rate was 26.4 g/hr and the production rate was I22 lb/hr. Triethylaluminum was used as a cocatalyst and was fed to the reactor in sufficient quantity to maintain an Al/Ti ratio of 86 during the course of the reaction.

The catalyst was used to prepare an ethylene-butene copolymer having an MI of I.0 and a resin density of 0.9209 g/cc. The resin had a MIR of 29.6. It had a narrow molecular weight distribution with $M_w$ = I33,600 and $M_w/M_n$ = 2.9. The poured bulk density of the resin based on ASTM Test D I895-69, Method B was 28.I lb/cu ft (0.45 g/cc). The tapped bulk density of the resin using the same test was 30.4 lb/cu ft (0.49 g/cc). The average resin particle size was 480 microns with 0.6 wt% fines less than I25 microns. Thus these particles have high bulk density.

TABLE 1

| EXAMPLE | PROD (1) | MI (DG/M) | MIR | MI SWELL | DENSITY (G/CC) | BULK DENSITY (G/CC) |
|---|---|---|---|---|---|---|
| 1 | 953 | 1.23 | 24.71 | 1.06 | 0.9432 | 0.43 |
| 2 | 320 | 0.53 | 25.80 | 1.15 | 0.9437 | 0.34 |
| 3 | 556 | 1.02 | 22.70 | 1.13 | 0.9445 | 0.37 |
| 4 | 753 | 1.76 | 23.60 | 1.09 | 0.9433 | 0.40 |
| 5 | 722 | 1.55 | 25.30 | 1.12 | 0.9420 | 0.43 |
| 6 | 820 | 1.46 | 24.40 | 1.18 | 0.9423 | 0.42 |

(1) Units of PROD (catalyst productivity) are g/g/hr

TABLE 2

| EXAMPLE | VOLUME BEM/PDMS (ML) | VOLUME SiHCl3 (ML) | VOLUME TiCl4 (ML) | WT % Ti | WT % Mg | WT % Cl |
|---|---|---|---|---|---|---|
| 2 | 5.61 | 11.3 | 0.88 | 0.62 | - | - |
| 3 | 7.86 | 15.8 | 1.24 | 0.76 | 1.47 | 6.56 |
| 4 | 8.98 | 18.0 | 1.44 | 0.83 | 1.54 | 7.03 |
| 5 | 11.24 | 22.6 | 1.80 | 0.91 | 1.74 | 7.80 |
| 6 | 12.36 | 24.6 | 1.96 | 0.94 | 1.80 | 8.04 |

TABLE 3

| EXAMPLE | PROD (1) | MI (DG/M) | MIR | MI SWELL | DENSITY (G/CC) | BULK DENSITY (G/CC) |
|---|---|---|---|---|---|---|
| Comp. 1 | 3235 | - | - | - | - | 0.16 |
| Comp. 2 | 86 | - | - | - | - | 0.38 |
| Comp. 3 | 96 | 0.38 | 80.50 | 1.08 | 0.9501 | - |
| Comp. 4 | 3218 | 1.84 | 41.10 | 1.63 | 0.9417 | 0.29 |
| Comp. 5 | 389 | 0.55 | 27.60 | 1.19 | 0.9425 | 0.39 |
| Comp. 6 | 1300 | 0.99 | 25.80 | 1.16 | 0.9425 | 0.40 |

(1) Units of PROD (catalyst productivity) are g/g/hr

TABLE 4

| EXAMPLE | PROD (1) | MI (DG/M) | MIR | MI SWELL | DENSITY (G/CC) | BULK DENSITY (G/CC) |
|---|---|---|---|---|---|---|
| 1 | 953 | 1.23 | 24.71 | 1.06 | 0.9432 | 0.43 |
| 7 | 480 | 0.56 | 24.20 | 1.15 | 0.9421 | 0.36 |
| 8 | 865 | 1.58 | 23.90 | 1.12 | 0.9420 | 0.42 |
| 9 | 1153 | 1.89 | 23.00 | 1.09 | 0.9416 | 0.43 |
| 10 | 1363 | 1.33 | 24.40 | 1.06 | 0.9419 | 0.44 |
| 11 | 680 | 0.74 | 23.80 | 1.15 | 0.9429 | 0.39 |
| 12 | 565 | 0.77 | 24.20 | 1.14 | 0.9431 | 0.39 |
| Comp. 7 | 13 | 0.35 | 31.60 | 1.17 | 0.9492 | - |

(1) Units of PROD (catalyst productivity) are g/g/hr

TABLE 5

| EXAMPLE | VOLUME BEM/PDMS (ML) | VOLUME SiHCl3 (ML) | VOLUME TiCl4 (ML) | WT % Ti | WT % Mg | WT % Cl |
|---|---|---|---|---|---|---|
| 7 | 5.61 | 11.3 | 0.88 | 0.62 | - | - |
| 8 | 7.86 | 15.8 | 1.24 | 0.76 | 1.47 | 6.56 |
| 9 | 8.98 | 18.0 | 1.44 | 0.83 | 1.54 | 7.03 |
| 10 | 10.00 | 20.0 | 1.60 | 0.94 | 1.80 | 8.04 |
| 11 | 11.24 | 22.6 | 1.80 | 0.91 | 1.74 | 7.80 |
| 12 | 12.36 | 24.6 | 1.96 | 0.94 | 1.80 | 8.04 |

TABLE 6

| EXAMPLE | SILOXANE MOLECULAR WT. | SILOXANE VISCOSITY (cSt) | PROD (1) | MI (DG/M) | MIR | MI SWELL | DENSITY (G/CC) | BULK DENSITY (G/CC) |
|---|---|---|---|---|---|---|---|---|
| 13 | 237 | 1.0 | 5752 | 1.56 | 27.30 | 1.19 | 0.9425 | 0.22 |
| 14 | 550 | 3.0 | 2521 | 2.60 | 24.90 | 1.16 | 0.9425 | 0.31 |
| 15 | 1250 | 10.0 | 938 | 1.15 | 24.30 | 1.08 | 0.9410 | 0.43 |
| 16 | 17250 | 500.0 | 552 | 0.66 | 24.50 | 1.14 | 0.9400 | 0.35 |

(1) Units of PROD (catalyst productivity) are g/g/hr

TABLE 7

| EXAMPLE | SILOXANE (2) | SILOXANE WT(G) | PROD (1) | MI (DG/M) | MIR | MI SWELL | DENSITY (G/CC) | BULK DENSITY (G/CC) |
|---|---|---|---|---|---|---|---|---|
| 17 | HPDS | 2.97 | 1404 | 1.56 | - | 1.29 | 0.9476 | 0.30 |
| 18 | TPDMDS | 2.90 | 1542 | 2.48 | - | 1.28 | 0.9459 | 0.33 |
| 19 | DPTMDS | 2.90 | 1565 | 1.73 | - | 1.32 | 0.9459 | 0.33 |
| 20 | OMCTS | - | 1290 | 1.47 | 27.50 | 1.21 | 0.9443 | 0.36 |

(1) Units of PROD (catalyst productivity) are g/g/hr

TABLE 8

| EXAMPLE | MAGNESIUM COMPOUND | SOLVENT | AMOUNT OF MG CMPD (ML) | AMOUNT OF SOLVENT (ML) |
|---|---|---|---|---|
| 21 | BEM(1) | Heptane | 14.28 | 10.38 |
| 22 | DBM(1) | Heptane | 12.33 | 12.33 |
| 23 | BuMgCl(1) | Ether | 4.50 | 20.16 |
| 24 | BEM(1) | Ether | 14.28 | 10.38 |
| 25 | BEM/BuOH(2) | Hexane | 15.00 | 9.56 |
| 26 | BEM/OctOH(2) | Hexane | 15.70 | 8.96 |

(1) BEM (butylethylmagnesium from Texas Alkyls) was 9.9% (w/w) in heptane, DBM (dibutyl- magnesium from Lithium Corporation of America) was 15% (w/w) in heptane, BuMgCl (butylmagnesium chloride) was used as a 1 molar solution in diethyl ether.

(2) BEM/BuOH is the reaction product of BEM and 1-butanol at a 1:1 molar ratio prepared by reacting 14.28 cc of BEM with 0.82 cc of 1-butanol. BEM/OctOH is the reaction product of BEM and 1-octanol at a 1:1 molar ratio prepared by reacting 14.28 cc of BEM with 1.42 cc of 1-octanol.

TABLE 9

| EXAMPLE | SP ACT (1) | MI (DG/M) | MIR | MI SWELL | DENSITY (G/CC) | BULK DENSITY (G/CC) |
|---|---|---|---|---|---|---|
| 21 | 230 | 1.52 | 25.90 | 1.12 | 0.9425 | 0.43 |
| 22 | 272 | 1.29 | 25.70 | 1.13 | 0.9425 | 0.43 |
| 23 | 159 | 0.77 | 27.84 | 1.17 | 0.9416 | 0.38 |
| 24 | 283 | 1.38 | 27.39 | 1.15 | 0.9425 | 0.39 |
| 25 | 270 | 1.46 | 26.50 | 1.11 | 0.9409 | 0.43 |
| 26 | 251 | 3.10 | 27.10 | 1.23 | 0.9427 | 0.42 |

(1) Units of Specific Activity as are kg/g Ti/hr/(mole/l of ethylene)

TABLE 10

| EXAMPLE | Ti COMPOUND | SP ACT (1) | MI (DG/MIN) | MIR | MI SWELL | DENSITY (G/CC) | BULK DENSITY (G/CC) |
|---|---|---|---|---|---|---|---|
| 27 | $TiCl_4$ | 188 | 1.20 | 24.10 | 1.16 | 0.9425 | 0.38 |
| 28 | $TiCl(OBu)_3$ | 90 | 0.69 | 24.30 | 1.14 | 0.9402 | 0.41 |
| 29 | $TiCl_2(OBu)_2$ | 153 | 0.90 | 25.60 | 1.12 | 0.9400 | 0.44 |

(1) Units of SP ACT (specific activity) are g/g Ti/hr/(mole/liter of ethylene)

TABLE 11

| EXAMPLE | Cl AGENT | PROD (1) | MI (DG/MIN) | MIR | MI SWELL | DENSITY (G/CC) | BULK DENSITY (G/CC) |
|---|---|---|---|---|---|---|---|
| 30 | $SiHCl_3$ | 1271 | 1.23 | 24.71 | 1.06 | 0.9432 | 0.43 |
| 31 | EADC | 951 | 1.04 | 31.24 | 1.24 | 0.9412 | 0.41 |
| 32 | DEAC | 224 | 0.72 | 26.56 | 1.14 | 0.9423 | 0.40 |
| 33 | IBADIC | 777 | 1.18 | 29.40 | 1.22 | 0.9440 | 0.35 |
| 34 | DIBAC | 230 | 0.67 | 31.90 | 1.21 | 0.9443 | 0.43 |
| 35 | $Cl_2$/5 min | 535 | 0.43 | 28.20 | 1.20 | 0.9404 | 0.34 |
| 36 | $Cl_2$/30 min | 160 | 0.32 | 29.30 | 1.18 | 0.9428 | 0.31 |

(1) Units of PROD (productivity) are g/g catalyst/hr

TABLE 12

| EXAMPLE | DEHYDRATION TEMPERATURE (°C) | QUANTITY DCDMS (1) (ML) | QUANTITY OF SUPPORT (G) | Mg COMPOUND (2) |
|---|---|---|---|---|
| 37 | 200 | 50.0 | 4.50 | BEM |
| 38 | 450 | 30.0 | 3.60 | BEM |
| 39 | 800 | 10.0 | 2.80 | BEM |
| 40 | 450 | 20.0 | 2.00 | $Mg(OR)_2$ |
| 41 | 450 | 20.0 | 2.00 | $Mg(OR)_2$ |

(1) DCDMS is dichlorodimethylsilane in a 1.0 mmole/ml solution in hexane.

(2) BEM (butylethylmagnesium from Texas Alkyls) was 9.9% (w/w) in heptane, $Mg(OR)_2$ (magnesium 2-methylpentyloxide from Lithium Corporation of America) was 15% (w/w) in heptane,

**Claims**

1. A transition metal containing catalyst component comprising the solid reaction product produced by (I) containing
   A. the dried solid obtained by reacting
      i. a solid, particulate porous support material in a solvent with
      ii. the reaction product of
         a. a magnesium-containing compound, and
         b. a polysiloxane, with
   B. a halogenating agent, and

   (II) contacting the halogenated product with a transition metal compound.

2. Catalyst component according to claim 1 wherein the support material (i) comprises a Group IIA, IIIA, IVA, or IVB metal oxide.

3. A catalyst component in accordance with claim 2 wherein the support material is silica.

4. A catalyst component according to claim 1, 2 or 3 wherein the magnesium-containing compound is represented by the formula $R^1MgX$ wherein $R^1$ is selected from alkyl, aryl, cycloalkyl, aralkyl, alkaryl, alkadienyl, and alkenyl groups having from 1 to 20 carbon atoms, and X, which may be the same or different from $R^1$, is selected from $R^1$, halide, a $C_1$-$C_{20}$ alkoxide, or siloxide groups.

5. A catalyst component in accordance with claim 4 wherein the magnesium compound comprises butylethylmagnesium, butylmagnesium chloride, di-butylmagnesium, di-n-hexylmagnesium, butyloctylmagnesium, butylmagnesium butoxide, butylmagnesium 2-ethylhexyloxide, or butylmagnesium 2-methyl pentyloxide.

6. A catalyst component according to any one of the preceding claims wherein the polysiloxane is represented by the general formula

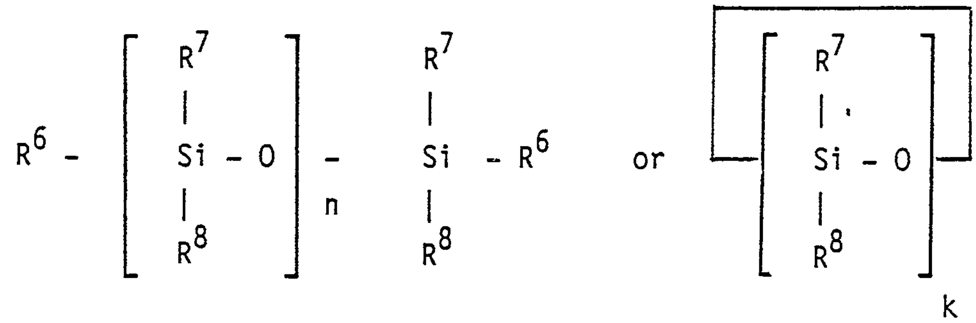

wherein $R^6$, $R^7$, and $R^8$, which can be the same or different, are each a hydrocarbon radical having from l to 24 carbon atoms, n is a number from l to lOOO, and k is a number from 3 to 2O.

7. A catalyst component according to any one of the preceding claims wherein the halogenating agent comprises a halosilane, aluminum halide, tin halide, germanium halide, halogen, boron halide, phosphorus halide, or antimony halide.

8. A catalyst component in accordance with claim 7 wherein the halogenating agent comprises trichlorosilane, methyltrichlorosilane, dimethyldichlorosilane, methyldichlorosilane, ethylaluminum dichloride, diethylaluminum chloride, isobutylaluminum dichloride, diisobutylaluminum chloride, boron trichloride, ethylboron dichloride, diethylboron chloride, phosphorus oxytrichloride, or chlorine.

9. A catalyst component according to any one of the preceding claims wherein the transition metal compound is one or more of the compounds represented by the formula: $TrX'_{4-q}(OR^9)_q$, $TrX'_{4-q}R^{10}_q$, $VO(OR^9)_3$ or $VOX'_3$ wherein Tr is a Group IVB, VB, or VIB metal, q is O or a number equal to or less than 4, X' is halogen and $R^9$ and $R^{10}$ are each indenpendently a hydrocarbyl or substituted hydrocarbyl group having from l to 2O carbon atoms.

lO. A catalyst component in accordance with claim 9 wherein the transition metal is selected from titanium, vanadium, or zirconium.

ll. A catalyst component in accordance with claim lO wherein the transition metal compound is $TiCl_4$.

l2. A transition metal containing catalyst component comprising the solid reaction product produced by (I) contacting

A. the dried solid obtained by reacting

i. a dry solid, particulate porous support of a Group IIA, IIIA, IVA, or IVB metal oxide with

ii. the reaction product of

a. a magnesium compound represented by the formula $R^1MgX$ wherein $R^1$ is selected from alkyl, aryl, cycloalkyl, aralkyl, alkaryl, alkadienyl, and alkenyl groups having from l to 2O carbon atoms, and X, which may be the same or different from $R^1$, is selected from $R^1$, halide, a $C_1$-$C_{20}$ alkoxide, or siloxide groups, and

b. a polysiloxane represented by the general formula

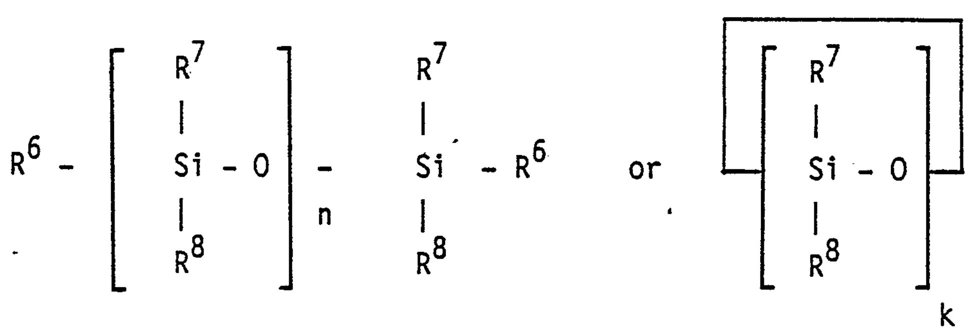

wherein $R^6$, $R^7$, and $R^8$, which can be the same or different, are each a hydrocarbon radical having from l to 24 carbon atoms, n is a number from l to lOOO, and k is a number from 3 to 2O, with

B. a halogenating agent chosen from halosilanes, aluminum halides, tin halides, germanium halides, halogens, boron halides, phosphorus halides, or antimony halides; and

(II) contacting the halogenated product with a transition metal compound or mixtures thereof represented by the formula:

$TrX'_{4-q}(OR^9)_q$, $TrX'_{4-q}R^{10}_q$, $VO(OR^9)_3$ and $VOX'_3$

wherein Tr is a Group IVB, VB, or VIB metal, q is O or a number equal to or less than 4, X' is halogen, $R^9$ is a hydrocarbyl or substituted hydrocarbyl group, having from I to 2O carbon atoms and $R^{10}$ is a hydrocarbyl group or substituted hydrocarbyl group having from I to 2O carbon atoms.

I3. A catalyst system for the polymerization or copolymerization of ethylene and alpha-olefins having from 3 to I2 carbon atoms comprising

A. an organometallic cocatalyst compound of a Group IA, IIA, or IIIA metal, and

B. a transition metal containing catalyst component according to any one of the preceding claims.

I4. A catalyst system according to claim I3 wherein the cocatalyst A comprises an organoaluminum compound of the formula $R_nAlX_{3-n}$ wherein R is hydrogen, hydrocarbon, or substituted hydrocarbon having from I to 2O carbon atoms, X is halogen and n is a number from I to 3.

I5. A catalyst system according to claim I3 or I4 which contains from IO-IOOO moles of cocatalyst A per mole of catalyst component B.

I6. A process for polymerization of ethylene and alpha-olefins having from I to 2O carbon atoms or mixtures of ethylene, alpha-olefins, and non-conjugated diolefins which process comprises polymerizing the monomer(s) in the presence of the catalyst system of claim I3, I4 or I5.

I7. A process according to claim I6 when carried out in the gas phase under process conditions adapted to produce a polymer having a bulk density of from 0.35-0.46 g/cm³.